# EUROPEAN PATENT SPECIFICATION

(11) **EP 3 208 241 B1**
(45) Date of publication and mention of the grant of the patent: **12.12.2018**
(21) Application number: 17156792.8
(22) Date of filing: 17.02.2017
(51) Int. Cl.: C02F 1/28, B01J 20/26, B01J 20/28, C02F 103/14, C02F 103/34, C02F 103/36, C02F 101/30, C02F 101/38, C02F 101/36

(54) **POROUS GRANULES OF POLYSULPHONE OR DERIVATIVES THEREOF FOR THE REMOVAL OF ORGANIC MOLECULES FROM A FLUID**
PORÖSE GRANULATE VON POLYSULPHONEN ODER DERIVATEN DAVON ZUR ENTFERNUNG ORGANISCHER MOLEKÜLE AUS EINEM FLUID
GRANULES POREUX DE POLYSULFONE OU DE SES DÉRIVÉS POUR L'ÉLIMINATION DE MOLÉCULES ORGANIQUES D'UN FLUIDE

(30) Priority: 18.02.2016 IT UB20160860
(43) Date of publication of application: 23.08.2017
(73) Proprietor: Medica S.p.A., 41036 Medolla (IT); Melucci, Manuela, 40138 Bologna (IT); Navacchia, Maria Luisa, 40131 Bologna (IT)
(72) Inventor: MELUCCI, Manuela, 40138 Bologna (IT); NAVACCHIA, Maria Luisa, 40131 Bologna (IT)
(74) Representative: Casciano, Lidia Giulia Rita

(56) References cited:
- WO-A1-2014/144798
- JP-A- 2013 208 596
- US-A1- 2003 100 617
- US-A1- 2011 054 120

## Description

The present invention concerns the use of porous granules of hollow polysulphone fibres or derivatives thereof for the removal of organic molecules from a fluid, in particular from waste water.

The treatment of aqueous matrixes with adsorbent materials is a widely used method in various sectors of application. Examples are the removal of organic contaminants from groundwater, surface water or tap water; the removal of pharmaceuticals from biological fluids (also having aqueous matrix) or of organic additives from liquid food products (fruit juices, drinks etc.).

It is known that the presence of organic molecules in waste water, surface water and drinking water constitutes one of the most urgent world problems in relation to the toxic effects that said compounds can produce both on the environment and on human health.

In particular, the presence of organic molecules is known, such as volatile organic compounds (VOCs), polycyclic aromatic hydrocarbons (PAHs), and also emerging organic contaminants (EOCs), i.e. contaminants for which presence and concentration limits have not yet been regulated at national and international level.

The polycyclic aromatic hydrocarbons are a family of hydrocarbon compounds with high molecular weight and weak polarity, therefore low solubility in water.

Of the PAHs considered most dangerous to humans and to the environment, benzo(a)pyrene is regarded as the most toxic.
The PAHs represent important contaminants of water into which they are released, in considerable quantities, by the production of coal tar distillates, or due to leakage of oil from oil tankers, oil refineries and offshore oil drilling points. Also when they are emitted in a gaseous form into the atmosphere, they tend to rapidly condense and be adsorbed on the surface of ash particles or reach the ground via precipitation mechanisms, of both gravitational-diffusional and meteorological type.

The treatment systems for water contaminated by PAHs include degradation processes by means of photolysis with UV/H₂O₂, by means of ozone or with UV/biological coupled systems and systems for removal by capture on solid matrix such as zeolite, low density polyethylene and activated carbons.
The quantities of PAHs and VOCs usually found in urban waste water are in the order of micrograms/litre whereas the quantities permitted in groundwater by the laws currently in force are 1 ng/litre for VOCs and 0.1 micrograms/l for PAHs.

EOCs are a new class of organic contaminant which are causing concern due to their unknown effects on the ecosystem and human health; they have either not yet been regulated or their limits are currently undergoing evaluation. Various EOCs have been found both in surface water and in waste water in concentrations within the range ng/L - µg/L.

Pharmaceuticals and compounds contained in personal care products (PPCPs-pharmaceuticals and personal care products) fall within the family of emerging organic contaminants.
Many of these compounds, also at low concentrations, can cause dysfunctions of the endocrine system, in particular in aquatic fauna, giving rise to phenomena of hermaphroditism in fish. In addition, the presence of these compounds in the environment not as a single component but in complex mixtures can give rise to synergistic toxicity effects.

The main path of contamination in the environment is due to effluent from domestic waste water treatment plants, since the pharmaceuticals are normally excreted by humans and the personal care products are discharged into the domestic waste water. These contaminants, their metabolytes and transformation products are difficult to remove by means of conventional treatment plants, therefore they can easily enter the aquatic environment and also reach drinking water.

Furthermore, the surface water can be contaminated by biorecalcitrant pharmaceutical substances for veterinary use as a consequence of their run-off from the ground towards rivers, if manure or digested sludge are used as fertilizers.

In recent years, systematic studies have shown the presence of analgesics, anti-inflammatory drugs, antibacterial drugs, antiepileptic drugs, β-blockers, oral contraceptives, antiseptics, UV filters contained in sun protection and in personal care products in tap water. It should be underlined that due to their low volatility the emerging contaminants tend to persist and to spread in the aquatic environment with consequent diffusion in the food chain.

Currently no technologies exist for exhaustive and universal purification of all the classes of emerging contaminants listed above. In particular, the advanced oxidation processes (AOPs), while being effective in the removal of microcontaminants, can result in the formation of intermediate reaction products, often unknown and with unpredictable toxicity.

On the other hand, the processes of adsorption do not lead to the formation of toxic by-products and are characterized by lower costs, when compared with membranes and AOPs.

Low-cost adsorbents deriving from natural materials, agricultural and industrial waste are the most promising materials at the moment. The adsorbents most widely used in water treatment are materials based on silica gel, activated alumina, zeolites and activated carbons. The latter are definitely the most popular and the most widely used in the treatment of waste water worldwide. In fact, due to their high surface area, microporous structure and relatively low costs, they are widely used for the capture of organic contaminants from industrial waste water, surface water and drinking water. However, activated carbons also have significant drawbacks: for example they act as a support for bacterial growth, their capture performance depends on operating conditions (e.g. temperature) and they become exhausted, entailing high costs for regeneration and transport off-site.

Various examples of alternative materials for water treatment have been reported in the literature, for example, waste materials from the processing of tea and the processing of coffee.

Furthermore, the agro-industrial processing waste tested includes fruit waste, for example shells of walnuts, peanuts and almonds, and apricot and cherry stones.

Non-conventional adsorbents have also been prepared from waste from industrial activities which usually generate large quantities of solid waste as manufacturing by-products; the latter have to be disposed of, with consequences in terms of costs and environmental impact. The re-use of said waste as adsorbents therefore offers considerable advantages in both the above-mentioned aspects.

Numerous works in literature deal with the removal of various contaminants by the use of low-cost adsorbents prepared from various types of manufacturing waste. An example is the ash of heating plants for the removal of metals, arsenic and phenols, the waste deriving from the steel and aluminium industry, the waste deriving from the fertilizer industry, the paper industry and tanneries.

Methods for the removal of organic contaminants with adsorbent materials are illustrated in JP2013208596, WO2014144798 and US2011054120.

The object of the present invention is therefore to provide new adsorbent materials at low cost, which are able to remove a wide range of organic compounds from a fluid and which are without the drawbacks of the known art.

Said object is achieved by the present invention, which concerns porous granules of hollow polysulphone fibre according to claim 1, a method for the removal of at least one organic molecule from a fluid by means of porous granules of hollow polysulphone fibre according to claim 3 and a method for preparation of the porous granules of hollow polysulphone fibre according to claim 12.

The present invention will now be described in detail with reference to the figures of the attached drawings, in which:
- Figure 1 illustrates a device 1 for carrying out the method according to the invention;
- Figures 2A, 2B and 2C illustrate SEM images of the polysulphone fragments obtained in example 1;
- Figure 3 illustrates the chemical structures of the emerging contaminants analysed in example 3;
- Figure 4 illustrates the chromatograms of the emerging contaminants of Figure 3 obtained after injection of 40 µL of an equimolar solution in which each contaminant is present in a concentration of 5 mg/L;
- Figure 5 illustrates A) polysulphone spheres obtained with the method illustrated in WO2014144798; B) polysulphone granules obtained by grinding the sample of panel A as illustrated in US2011054120; c) morphology of the polysulphone granules of panel B; D) surface micropores of panel C and enlargement of the pores;
- Figure 6 illustrates the removal efficiency of the granules of the invention and the granules of the known art measured A) after 10 minutes; B) after 1 hour and C) after 24 hours of treatment.

In particular, according to a first aspect of the present invention, porous granules of hollow polysulphone fibres or derivatives thereof are provided having a mean length ranging from 0.1 mm to 5 mm in which said granules are provided with an outer surface having pores with mean diameter ranging from 5 µm to 15 µm and an inner surface provided with pores having mean diameter ranging from 5 nm to 80 nm.

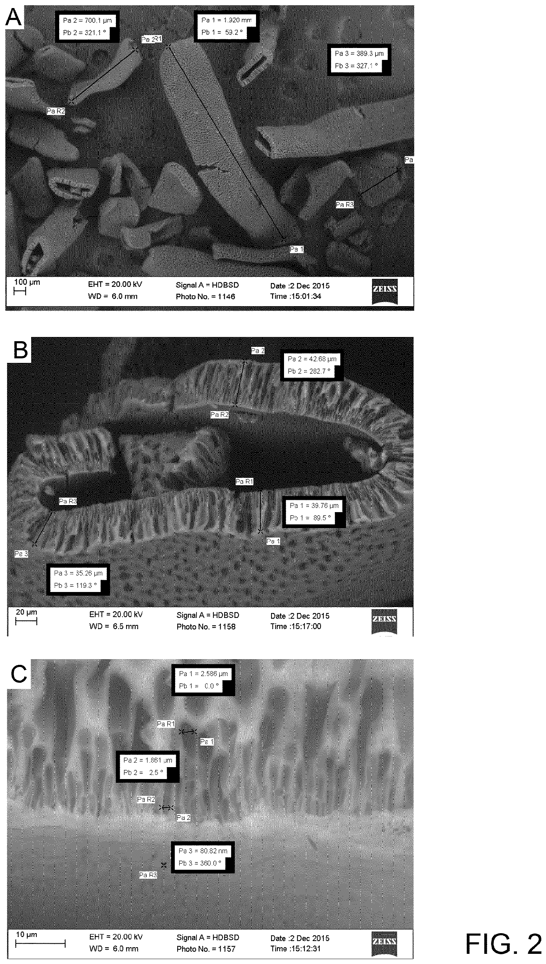

Advantageously, as can be seen from figures 2B and 2C, the granules of hollow fibres according to the invention are provided with conical pores which taper towards the inside of the hollow fibre wall. Sometimes said pores on the outer surface communicate with the pores on the inner surface of the hollow fibre, thus creating, in the section of the hollow fibre wall, channels which have a mean diameter in the area of the outer wall ranging from 5 µm to 15 µm and a mean diameter in the area of the inner wall ranging from 5 nm to 80 nm.

The porous granules of polysulphone or derivatives thereof derive from hollow fibres used for the removal of toxins and bacteria from dialysis fluids, for example Medisulfone™.

In particular, reference is made to the processing waste of hollow polysulphone fibres. Preparation of the filtering modules entails a phase of cutting the hollow fibres to size them according to the final dimension of the cartridge. This process entails a loss equal to or higher than 5% of good material which becomes a plastic waste material. The present invention allows re-use of this waste together with the initial hollow fibres.

Preferably, the porous granules of polysulphone or derivatives thereof have a mean length ranging from 0.1 to 1 mm.

The porous granules can further have a mean internal diameter ranging from 50 to 250 µm.

According to a further aspect of the present invention, a method is provided for the removal of at least one organic molecule from a fluid comprising the step of placing in contact the porous granules of hollow polysulphone fibres with the fluid.

Advantageously, the material and the method according to the invention allow the removal of a wide range of organic compounds with improved performance compared to the initial hollow fibres. They also have high hydrophobicity and therefore do not dissolve in water, demonstrating a strong affinity with low-solubility organic compounds, they float on the water allowing easy removal after use in a free form, they have a high surface area, high porosity with varying dimensions, versatility of modes of use (dispersion, filter, tea bag), possibility of re-use, thermal stability and stability in a pH range between 1 and 10.

The porous granules of hollow fibre according to the present invention are able to operate combining both a mechanism of action by filtering through the pores of the fibres and by adsorption linked to the chemical structure of the polymer.

The organic molecules retained can be selected from the group consisting of VOCs, PAHs, UV filters, antibiotics, anti-inflammatory compounds, anticonvulsant compounds, alkaloids, dyes, non-ionic surfactants, monomers of plastic materials such as polycarbonates, and mixtures thereof, in particular benzophenones, fluoroquinolone antibiotics, dibenzazepine, purine alkaloids, arylacetic nonsteroidal anti-inflammatory drugs, xanthene dyes, alkylphenolyethoxylates and bisphenols. Preferably the organic molecule is selected from the group consisting of ofloxacin, benzophenone-3, caffeine, carbamazepine, diclofenac, bisphenol A, benzophenone-4, rhodamine and Triton X-100 and mixtures thereof.

The organic molecules can be removed from the fluid using the porous granules as they are in dispersion in the fluid from which the organic compounds have to be removed.

Alternatively the step of bringing the porous granules into contact with the fluid can be carried out by immersion in the fluid of a container made of a material permeable to the fluid and containing the granules. The permeable material can be selected from the group consisting of cellulose and derivatives thereof, nylon, Teflon, polysulphones, polypropylenes, polyethersulphones, polyvinylidene fluorides, polyacrylonitriles and polyamides.

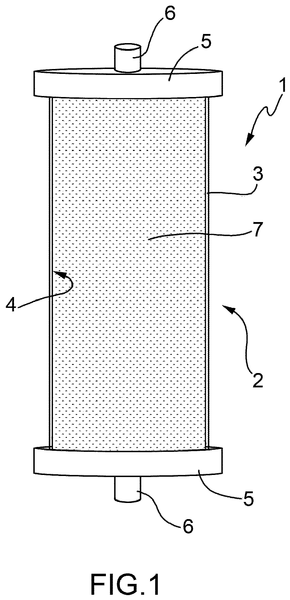

In a further alternative, illustrated in figure 1, the step of bringing the porous granules into contact with the fluid can be carried out by means of a device 1, or cartridge, comprising a supporting structure 2 in which an adsorption chamber 4 and at least one pair of openings 6 for inlet and outlet respectively of the fluid into/from the adsorption chamber 4 are obtained. The adsorption chamber 4 and the pair of openings 6 are in fluidic connection with each other. The fragments 7 are arranged in the adsorption chamber 4.

In particular, the device 1 comprises a cartridge 2 comprising a side wall 3 having a cylindrical shape, illustrated in section for the sake of clarity of description, and adapted to define an adsorption chamber 4. The cartridge 2 further comprises a pair of circular closing elements 5 arranged to close the axial ends of the side wall 3. In each of the circular closing elements 5 an opening is obtained to allow the inlet and outlet of the liquid to be treated. Lastly, each of the circular closing elements 5 comprises a connection 6 in the area of the respective opening for the connection of treatment tubes. Generally, the cartridge 2 is made of plastic, for example polycarbonate.

The openings for the inlet and outlet of the liquid to be treated can also be made on the side surface of the cartridge. The porous granules of hollow polysulphone fibres described above are housed inside the adsorption chamber.

With the method of the invention it is possible to treat fluids selected from the group consisting of waste water, drinking water, biological fluids and airflow, for example for the removal of toxic organic molecules from the blood or the treatment of intoxication by pharmaceuticals.

According to a second aspect of the invention, a method is provided for preparation of the porous granules of polysulphone described above comprising the steps of thermal hardening of hollow polysulphone fibres followed by mechanical grinding into granules.

Further characteristics of the present invention will become clear from the following description of some merely illustrative and non-limiting examples.

### Example 1

### Preparation of porous granules of polysulphone

Hollow fibres made of polysulphone (Medisulfone™ (5g, supplied by Medica Spa) are placed in a domestic coffee grinder (two steel blades, power 180 W, volume approximately 200 ml) together with approximately 20 ml of liquid nitrogen. The grinder is operated for 4-5 seconds, 10 times at intervals of 2-3 seconds. After repeating the addition of liquid nitrogen and the grinding procedure described above, a white powder is obtained.

The morphology of the fragments thus obtained was studied by means of Scanning Electron Microscopy (SEM). The fragments show a mean length varying from 0.2 to 2 mm, section with internal diameter 50-250 µm, and pores on the outer surface having mean diameter of 7 µm (figure 2).

### Example 2

### Analysis of post-adsorption potability

250 ml of mains drinking water were fluxed at 30 ml/min in a column containing 2g of porous granules of polysulphone as obtained in example 1. Some chemical-physical potability parameters were measured upstream and downstream of the treatment. The data are reported in Table 1.

**Table 1**

| TEST | Upstream | Downstream |
|---|---|---|
| Turbidity | 0 | 0 |
| Odour | ODOURLESS | ODOURLESS |
| Flavour | FLAVOURLESS | FLAVOURLESS |
| Colour | COLOURLESS | COLOURLESS |
| pH | 8.27 | 8.25 |
| Conductivity | 409 microS/cm | 520 microS/cm |
| Total hardness | 30.44 °F | 31.51 °F |
| Fixed residue at 180°C | 286.3 mg/l | 364.0 mg/l |
| TOC | 0 | 0 |
| Ammonia nitrogen | <0.4 mg/l | <0.4 mg/l |
| Chlorides | 28.3 mg/l | 30.7 mg/l |
| Sulphates | 80.0 mg/l | 91.2 mg/l |
| Aluminium | <0.05 mg/l | <0.05 mg/l |
| Sodium | 27.2 mg/l | 27.8 mg/l |
| Iron | 0.03 mg/l | 0.02 mg/l |
| Manganese | 0.04 mg/l | 0.04mg/l |

The analyses upstream and downstream are comparable and the values are within the legal limit, i.e. the treatment does not affect the potability.

Therefore the granules of the invention can be used for the removal of organic molecules from drinking water without affecting potability.

### Example 3

### Removal of emerging contaminants from a water solution

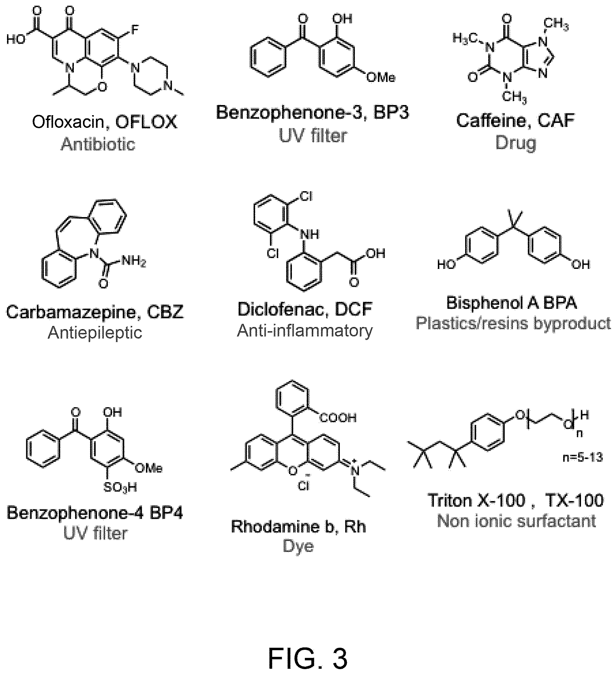

The adsorbing capacity of the porous granules prepared according to example 1 was evaluated both on a single species (on caffeine and rhodamine) and on a mixture of 9 organic compounds representing different classes of emerging contaminants (figure 3).

### Preparation of the solutions of emerging contaminants

A master mixture was prepared (in 1 litre of tap water) containing all the compounds shown in figure 3 at the concentration of 5 mg/l each. The mixture was kept in the dark and under stirring at ambient temperature for 72 hours until complete dissolution of all the analytes. The master solution was used at the preparation concentration (45 mg/L total) or diluted 1:10 (4.5 mg/L total). The control experiments on single species were performed on caffeine and rhodamine (separately) at the concentration 50 mg/L.

### Development of HPLC method for detection of emerging contaminants

For detection of the emerging contaminants both in the master mixture and for the analyses on the single compound (rhodamine and caffeine), an HPLC method was developed which allows quantification of the nine components in the mixture in one single analysis using a diode array UV detector and a fluorimeter. For the analyses, an HPLC 1260 Agilent was used provided with automatic injector, diode array UV detector and Varian Pro Star fluorescence detector.

0.5 mL of each sample solution were prepared and 40 µL of each sample were injected. A Zorbax C8 4.6 x 150 mm reverse phase column was used, 5 µm, with flow of 1.0 mL/min and gradient reported in table 2.

**Table 2**

| Time (min) | Solvent A (0.05% of trifluoroacetic acid in water) | Solvent B (acetonitrile) |
|---|---|---|
| 0 | 80 | 20 |
| 4 | 0 | 100 |
| 7 | 0 | 100 |
| 8 | 80 | 100 |

Each compound was quantified for comparison between the area subtended by the peak at the wavelength indicated in table 3 for each component and the area of the corresponding peak in the starting mixture. Repeated injections indicate area values that differ by less than 1%.

**Table 3**

| Compound | RT (min) | Absorbance λₘₐₓ (nm) | Fluorescence λₑₘ (nm) - [λₑₓ (nm)] |
|---|---|---|---|
| CAF | 2.412 | 273 | |
| OFLOX | 2.706 | 285 | |
| BP-4 | 2.988 | 285 | |
| CBZ | 3.949 | 285 | |
| BPA | 4.276 | - | 280 [310] |
| Rh | 4.708 | 540 | |
| DCF | 4.806 | 285 | |
| BP-3 | 5.024 | 285 | |
| TX-100 | 5.646 | - | 290 [302] |

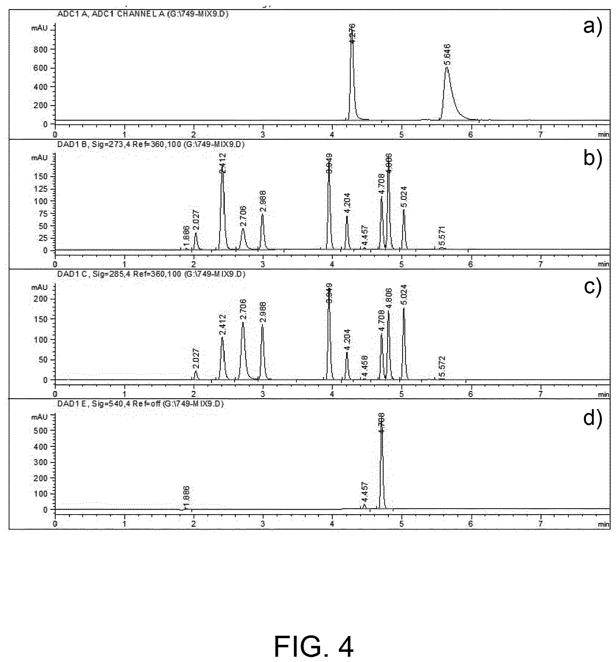

Figure 4 shows a typical chromatogram of the mixture of the nine emerging contaminants in equimolar quantities (injection of 40 µL of solution at the total concentration of 45 mg/L). In particular figure 4a reports the fluorescence signal for BPA and TX-100 at the reference wavelengths respectively (cf. table 3). Figure 4b shows the chromatogram extracted at the wavelength of 273 nm which corresponds to the maximum absorption of CAF. Figure 4c shows the chromatogram extracted at the wavelength of 285 nm chosen to quantify OFLOX, BP4, CBZ, DCF and BP3. Figure 4d shows the chromatogram extracted at the wavelength of 540 nm which corresponds to the maximum absorption of Rh; the signal at 2.07 is an impurity.

### Adsorption of emerging contaminants with porous granules of hollow polysulphone fibre in a column according to the present invention

A polycarbonate column (length 6 cm, internal diameter 1.1 cm) is filled with 2 g of porous granules of polysulphone prepared as described in example 1. One end of the column is connected to a positive-displacement pump which in turn is connected to the container containing the solution comprising the emerging contaminants at the total concentration of 4.5 mg/L. The other end of the column is connected to a collecting container. For the connections, PVC tubes are used (internal diameter 5 mm) . The flow out of the column is regulated at 30 ml/min.

The results obtained in terms of adsorption are reported in Table 4.

**Table 4**

| Compound | Initial conc. µg/250 mL | Final conc. µg/250 mL | Capture per gram of adsorbent % |
|---|---|---|---|
| CAF | 125 | 119 | 5 |
| OFLOX | 125 | 100 | 20 |
| BP-4 | 125 | 80 | 36 |
| CBZ | 125 | 50 | 60 |
| BPA | 125 | 30 | 76 |
| Rh | 125 | 0 | 100 |
| DCF | 125 | 40 | 68 |
| BP-3 | 125 | 0 | 100 |
| TX-100 | 125 | 0 | 100 |

Table 5 reports the results in terms of adsorption for column flows equal to 1.5 ml/min.

**Table 5**

| Compound | Initial conc. µg/250 mL | Final conc. µg/250 mL | Capture per gram of adsorbent % |
|---|---|---|---|
| CAF | 125 | 102.5 | 18 |
| OFLOX | 125 | 72.5 | 42 |
| BP-4 | 125 | 56.25 | 55 |
| CBZ | 125 | 12.5 | 90 |
| BPA | 125 | 0 | 100 |
| Rh | 125 | 0 | 100 |
| DCF | 125 | 0 | 100 |
| BP-3 | 125 | 0 | 100 |
| TX-100 | 125 | 0 | 100 |

From the data in tables 4 and 5 it can be noted that three components (TX-100, BP3 and Rh) are removed quantitatively independently of the contact time between mixture and adsorbent, or independently of the flow used. For the other analytes, an improvement is noted in the capture capacity as the contact time increases, or at lower work flows. The removal becomes quantitative also for BPA and DCF in the flow conditions 1.5 ml/min (table 5) and significantly improves for the other analytes.

### Adsorption of emerging contaminants with porous granules of polysulphone in suspension in the fluid according to the present invention

The porous granules (2 grams) as obtained in example 1 are dispersed directly in 250 ml of the solution of emerging contaminants to be treated (concentration 125 µg/250 mL for each contaminant) and left in immersion for approximately 10 minutes. A portion of the solution is then filtered and analysed with the HPLC method described above.

The results obtained are reported in table 6.

**Table 6**

| Compound | Initial conc. µg/250mL | Final conc. µg/250mL 10 min | Capture per gram of adsorbent % | Final conc. µg/250 mL 24h | Capture per gram of adsorbent % |
|---|---|---|---|---|---|
| CAF | 125 | 106.25 | 15 | 95 | 24 |
| OFLOX | 125 | 81.25 | 35 | 78.75 | 37 |
| BP-4 | 125 | 62.5 | 50 | 62.5 | 50 |
| CBZ | 125 | 21.25 | 83 | 18.75 | 85 |
| BPA | 125 | 5 | 96 | 0 | 100 |
| Rh | 125 | 0 | 100 | 0 | 100 |
| DCF | 125 | 12.5 | 90 | 8.75 | 93 |
| BP-3 | 125 | 0 | 100 | 0 | 100 |
| TRX | 125 | 0 | 100 | 0 | 100 |

The same experiment was repeated adding 2g of porous granules as prepared in example 1 in a solution of emerging contaminants at the concentration of 45 mg/l (or 1250 µg/250mL). The results are reported in table 7.

**Table 7**

| Comp. | Initial conc. µg/250 mL | Final conc. µg/250 mL 10 min | Capture per gram of adsorbent % | Final conc. µg/250 mL 24 h | Capture per gram of adsorbent % |
|---|---|---|---|---|---|
| CAF | 1250 | 1175 | 6 | 1050 | 16 |
| OFLOX | 1250 | 938 | 25 | 787.5 | 37 |
| BP-4 | 1250 | 1000 | 20 | 900 | 28 |
| CBZ | 1250 | 638 | 49 | 312.5 | 75 |
| BPA | 1250 | 313 | 75 | 0 | 100 |
| Rh | 1250 | 25 | 98 | 12.5 | 99 |
| DCF | 1250 | 538 | 57 | 262.5 | 79 |
| BP-3 | 1250 | 38 | 97 | 0 | 100 |
| TRX | 1250 | 0 | 100 | 0 | 100 |

From the data in the table it can be seen that the adsorbent functions in a manner comparable to the two work concentrations, or the capture is quantitative for four analytes out of nine. Furthermore it can be noted that the majority of the capture occurs in a few minutes of contact (10 min) and the process goes to equilibrium within 24 hours.

### Proof of adsorption of single species

Table 8 reports the data of the adsorption of caffeine and rhodamine (single species) by 2g of porous granules as prepared in example 1 in which the single contaminant is present at a concentration of 50 mg/L.

**Table 8**

| Compound | Initial conc. mg/100 mL | Final conc. mg/100 mL 10 min | Capture per gram of adsorbent % |
|---|---|---|---|
| CAF | 5 | 4.65 | 7 |

| Compound | Initial conc. mg/250mL | Final conc. mg/250 mL 10 min | Capture per gram of adsorbent % |
|---|---|---|---|
| Rh | 12.5 | 1.125 | 91 |

From the data it can be seen that the capture percentages observed remain unchanged also for concentrations higher than those used in the mixture.

### Example 4

### Removal of volatile organic compounds from a water solution

The adsorbent capacity of the fibres prepared according to example 1 was evaluated on a mixture of volatile organic compounds.

### Preparation of the mixture of volatile organic compounds

A mixture of aromatic, chlorinated and halogenated volatile organic compounds was prepared, at a concentration of approximately 50 µg/l (table 9) for each compound in ultrapure water by dilution of a commercially available standard solution (Sigma Aldrich). The mixture was kept at 4°C in the dark in bottles suitable for the analysis of volatile compounds.

**Table 9**

| AROMATIC COMPOUNDS | INITIAL C. |
|---|---|
| Benzene | 41.36 µg/l |
| Ethylbenzene | 37.42 µg/l |
| Toluene | 37.42 µg/l |
| Xylene | 39.96 µg/l |
| Styrene | 41.95 µg/l |

| NON-CARCINOGENIC CHLORINATED COMPOUNDS | INITIAL C. |
|---|---|
| 1,1-dichloroethane | 36.26 µg/l |
| 1,1-dichloroethylene | 35.95 µg/l |
| Trichloroethylene | 37.72 µg/l |
| 1,2-dichloroethylene | 35.99 µg/l |
| 1,2-dichloropropane | 35.99 µg/l |
| 1,1,2 Trichloroethane | 33.43 µg/l |
| 1,1,2,2-tetrachloroethane | 35.40 µg/l |

| NON-CARCINOGENIC CHLORINATED COMPOUNDS | INITIAL C. |
|---|---|
| Trichloromethane | 35.88 µg/l |
| Vinyl chloride | 30.43 µg/l |
| 1,2-dichloroethane | 34.18 µg/l |
| Tetrachloroethylene (PCE) | 37.94 µg/l |
| Hexachlorobutadiene | 45.81 µg/l |

| NON-CARCINOGENIC HALOGENATED COMPOUNDS | INITIAL C. |
|---|---|
| Tribromomethane | 35.50 µg/l |
| Dibromochloromethane | 34.04 µg/l |
| Bromodichloromethane | 34.15 µg/l |

### Adsorption of volatile organic compounds with porous granules of polysulphone in a column according to the present invention

A polycarbonate column (length 6 cm, internal diameter 1.1 cm) is filled with 2 g of porous granules of polysulphone prepared as described in example 1. One end of the column is connected to a positive-displacement pump which in turn is connected to the container containing the solution comprising the volatile organic compounds. The other end of the column is connected to a collecting container. For the connections, PVC tubes are used (internal diameter 5 mm). The flow out of the column is regulated at 30 ml/min.

The results obtained in terms of adsorption are reported in table 10.

**Table 10**

| AROMATIC COMPOUNDS | INITIAL CONC. | FINAL CONC. | CAPTURE per gram of ads. % |
|---|---|---|---|
| Benzene | 41.36 µg/l | 0.20 µg/l | 99.46 |
| Ethylbenzene | 37.42 µg/l | 0.10 µg/l | 99.76 |
| Toluene | 37.42 µg/l | 0.10 µg/l | 99.73 |
| Xylene | 39.96 µg/l | 0.28 µg/l | 99.30 |
| Styrene | 41.95 µg/l | 0.85 µg/l | 97.97 |

| NON-CARCINOGENIC CHLORINATED COMPOUNDS | INITIAL CONC. | FINAL CONC. | CAPTURE per gram of ads. % |
|---|---|---|---|
| 1,1-dichloroethane | 36.26 µg/l | 0.93 µg/l | 97.44 |
| 1,1-dichloroethylene | 35.95 µg/l | 0.14 µg/l | 99.61 |
| Trichloroethylene | 37.72 µg/l | 0.10 µg/l | 99.73 |
| 1,2-dichloroethylene | 35.99 µg/l | 0.10 µg/l | 99.72 |
| 1,2-dichloropropane | 35.99 µg/l | 1.19 µg/l | 96.69 |
| 1,1,2 Trichloroethane | 33.43 µg/l | 1.25 µg/l | 96.26 |
| 1,1,2,2-tetrachloroethane | 35.40 µg/l | 2.31µg/l | 93.47 |
| Trichloromethane | 35.88 µg/l | 0.70 µg/l | 98.05 |
| Vinyl chloride | 30.43 µg/l | 2.54 µg/l | 91.65 |
| 1,2-dichloroethane | 34.18 µg/l | 0.47 µg/l | 98.62 |
| Tetrachloroethylene (PCE) | 37.94 µg/l | 0.10 µg/l | 99.74 |
| Hexachlorobutadiene | 45.81 µg/l | 0.11 µg/l | 99.76 |

| NON-CARCINOGENIC HALOGENATED COMPOUNDS | INITIAL CONC. | FINAL CONC. | CAPTURE per gram of ads. % |
|---|---|---|---|
| Tribromomethane | 35.50 µg/l | 1.05 µg/l | 97.04 |
| Dibromochloromethane | 34.04 µg/l | 0.67µg/l | 98.03 |
| Bromodichloromethane | 34.15 µg/l | 0.63 µg/l | 98.16 |

The data in the table show effective capture by the adsorbent for all the compounds considered.

### Example 5

### Removal of polycyclic aromatic hydrocarbons from a water solution

The adsorbent capacity of the fibres prepared according to example 1 was evaluated on a mixture of polycyclic aromatic hydrocarbons.

### Preparation of the mixture of polycyclic aromatic hydrocarbons

A mixture of five polycyclic aromatic hydrocarbons was prepared from commercially available standards (Aldrich) at a concentration varying from 50 to 100 µg/l of each compound in ultrapure water (table 11). The mixture was kept in the dark at 4°C in suitable glass bottles.

**Table 11**

| POLYCYCLIC AROMATIC HYDROCARBON | INITIAL C. |
|---|---|
| Benzo(b)fluoranthene | 0.102 µg/l |
| Benzo(k)fluoranthene | 0.051 µg/l |
| Benzo(a)pyrene | 0.055 µg/l |
| Benzo(g,h,i)perylene | 0.105 µg/l |
| Indeno(1,2,3-cd)pyrene | 0.051 µg/l |

### Adsorption of polycyclic aromatic hydrocarbons with porous granules of polysulphone in a column according to the present invention

A polycarbonate column (length 6 cm, internal diameter 1.1 cm) is filled with 2 g of porous granules of polysulphone prepared as described in example 1. One end of the column is connected to a positive-displacement pump which in turn is connected to the container containing the solution comprising the polycyclic aromatic hydrocarbons. The other end of the column is connected to a collecting container. For the connections, PVC tubes are used (internal diameter 5 mm). The flow out of the column is regulated at 30 ml/min.

The results obtained, as a mean value out of 5 analyses, in terms of adsorption are reported in table 12.

**Table 12**

| POLYCYCLIC AROMATIC HYDROCARBON | Initial conc. µg/l | Final conc. µg/l | Capture per gram of adsorbent % |
|---|---|---|---|
| Benzo(b)fluoranthene | 0.102 | 0.0082 | 92.0 |
| Benzo(k)fluoranthene | 0.051 | 0.0032 | 93.8 |
| Benzo(a)pyrene | 0.055 | 0.0016 | 97.3 |
| Benzo(g,h,i)perylene | 0.105 | 0.0181 | 83.5 |
| Indeno(1,2,3-cd)pyrene | 0.051 | 0.0099 | 81.3 |

The data in the table show an effective capture by the adsorbent for all the compounds considered.

### EXAMPLE 6

### Comparison of the adsorbent capacity of the granules according to the invention with the porous granules of polysulphone described in JP2013208596, WO2014144798 and US2011054120

Porous granules of polysulphone were prepared according to the procedure illustrated in WO2014144798 and subsequently ground as illustrated in US2011054120.

The synthesis procedure followed is the following: the polysulphone (Aldrich, 5g, PM= 35.000) was dissolved in 20 ml of N,N-dimethylacetamide (DMAc, Sigma-Aldrich) at 80°C and stirred for 4 hours to ensure complete dissolution of the polymer. To eliminate air bubbles, the polymer solution was maintained at 50°C for 16 hours without stirring.

The solution was poured dropwise into a milliQ water bath to obtain spherical granules of polysulphone having dimensions ranging from 1 to 3 mm. The particles were then washed with milliQ water to eliminate the residual solvent (3 cycles of 1 hour under magnetic stirring in 1 L of water deionized by filtering) and dried at 45°C until the weight was constant.

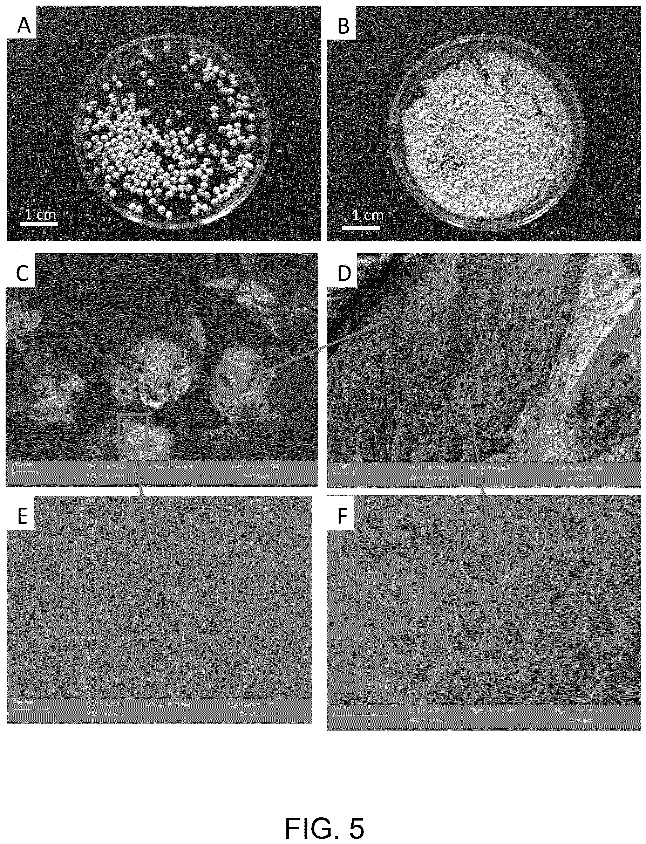

Figure 5a illustrates the polysulphone spheres obtained which were then ground as described in D3 to obtain granules having dimensions of less than 1 mm (figure 5b).

The morphology of the polysulphone granules is shown in figure 5C-F. A nanoporous outer surface (fig. 5C,E) and an inner micro porosity (fig. 5D,F) can be easily distinguished.

It is obvious that the morphology of the granules of the known art is very different from that of the granules of hollow fibres of the present invention (compare figures 5c and 5d with figure 2).

Their performance was evaluated on a mixture of 8 organic contaminants with variable chemical structure (for example, solubility in water, oil-water distribution, dipole moment). The same contact time in suspension was used (10 minutes, 1 hour, 24 hours) and the same concentration (5 mg/L of each contaminant).

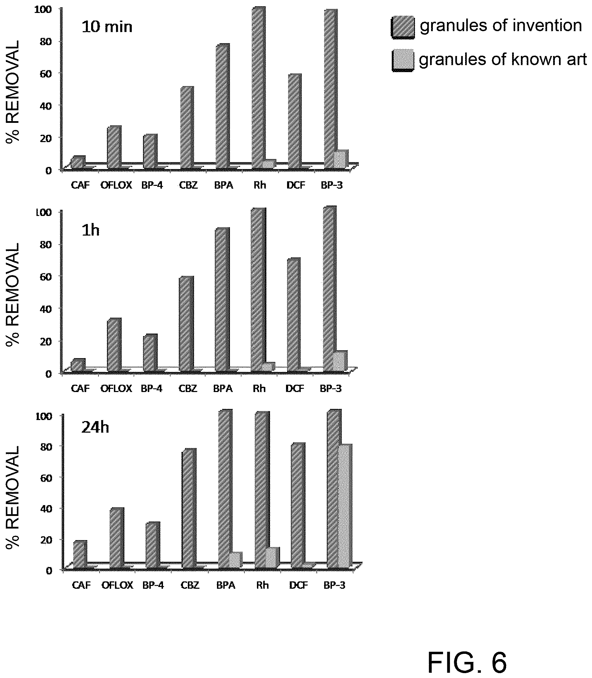

The removal efficiencies are illustrated in figure 6.

The results clearly show that the granules of hollow fibres according to the present invention are more efficient than the porous granules of the known art.

## Claims

1. Porous granules of hollow polysulphone fibres or derivatives thereof having a mean length ranging from 0.1 to 5 mm in which said granules are provided with an outer surface provided with pores having mean diameter ranging from 5 µm to 15 µm and an inner surface provided with pores having mean diameter ranging from 5 nm to 80 nm.

2. Porous granules of hollow fibres according to claim 1, **characterized in that** they have a mean internal diameter ranging from 50 µm to 250 µm.

3. A method for the removal of at least one organic molecule from a fluid comprising the step of a) bringing the porous granules of hollow fibres according to claim 1 into contact with said fluid.

4. A method according to claim 3, **characterized in that** said organic molecule is selected from the group consisting of volatile organic compounds (VOCs), polycyclic aromatic hydrocarbons (PAHs), UV filters, antibiotics, anti-inflammatory compounds, anticonvulsant compounds, alkaloids, dyes, non-ionic surfactants, monomers of plastic materials or mixtures thereof.

5. A method according to claim 4 **characterized in that** said organic molecule is selected from the group consisting of benzophenones, fluoroquinolone antibiotics, dibenzazepines, purine core alkaloids, arylacetic nonsteroidal antiinflammatories, xanthene dyes, alkylphenolyethoxylates, bisphenols and mixtures thereof.

6. A method according to claim 4 or 5 **characterized in that** said organic molecule is selected from the group consisting of ofloxacin, benzophenone-3, caffeine, carbamazepine, diclofenac, bisphenol A, benzophenone-4, rhodamine and Triton X-100 and mixtures thereof.

7. A method according to claim 3 **characterized in that** said fluid is selected from the group consisting of waste water, drinking water, airflow and biological fluids.

8. A method according to claim 3 **characterized in that** said step a) is carried out by dispersion of said porous granules in said fluid.

9. A method according to claim 3 **characterized in that** said step a) is carried out by immersion in said fluid of a container made of a material permeable to said fluid containing said porous granules.

10. A method according to claim 9 **characterized in that** said permeable material is selected from the group consisting of cellulose and its derivatives, nylon, Teflon, polyethersulphones, polyvinylidene fluorides, polypropylenes, polyacrylonitrile and polyamides.

11. A method according to claim 3 **characterized in that** said step a) is carried out by means of a device (1) comprising a supporting structure (2) wherein are obtained an adsorption chamber (4) and at least one pair of openings (6) for the inlet and outlet respectively of said fluid into/out of said adsorption chamber (4), wherein said adsorption chamber (4) and said pair of openings (6) are in fluidic connection with each other and wherein said porous granules (7) are arranged in said adsorption chamber (4).

12. A method for the preparation of porous granules of hollow polysulphone fibres according to claim 1 comprising the hardening phases by temperature lowering of hollow polysulphone fibres and subsequent mechanical grinding.

13. A method according to claim 12, **characterized in that** said hollow polysulphone fibres derive from processing waste of hollow polysulphone fibre.

## Patentansprüche

1. Poröses Granulat aus hohlen Polysulfonfasern oder Derivaten davon mit einer mittleren Länge im Bereich von 0,1 bis 5 mm, wobei die Körner des Granulats mit einer äußeren Oberfläche, die Poren mit einem mittleren Durchmesser im Bereich von 5 µm bis 15 µm aufweist, und einer inneren Oberfläche, die Poren mit einem mittleren Durchmesser im Bereich von 5 nm bis 80 nm aufweist, versehen sind.

2. Poröses Granulat aus hohlen Fasern gemäß Anspruch 1, **dadurch gekennzeichnet, dass** die Körner einen mittleren internen Durchmesser im Bereich von 50 µm bis 250 µm aufweisen.

3. Verfahren zur Entfernung wenigstens eines organischen Moleküls aus einem Fluid, umfassend den Schritt des a) In-Kontakt-Bringens des porösen Granulats aus hohlen Fasern gemäß Anspruch 1 mit dem Fluid.

4. Verfahren gemäß Anspruch 3, **dadurch gekennzeichnet, dass** das organische Molekül aus der Gruppe ausgewählt ist, die aus flüchtigen organischen Verbindungen (VOCs), polycyclischen aromatischen Kohlenwasserstoffen (PAHs), UV-Filtern, Antibiotika, entzündungshemmenden Verbindungen, krampflösenden Verbindungen, Alkaloiden, Farbstoffen, nichtionischen Tensiden, Monomeren von Kunststoffen oder Gemischen davon besteht.

5. Verfahren gemäß Anspruch 4, **dadurch gekennzeichnet, dass** das organische Molekül aus der Gruppe ausgewählt ist, die aus Benzophenonen, Fluorchinolon-Antibiotika, Dibenzazepinen, Purinkernalkaloiden, Arylessigsäurederivaten als nichtsteroidalen entzündungshemmenden Wirkstoffen, Xanthenfarbstoffen, Alkylphenolethoxylaten, Bisphenolen und Gemischen davon besteht.

6. Verfahren gemäß Anspruch 4 oder 5, **dadurch gekennzeichnet, dass** das organische Molekül aus der Gruppe ausgewählt ist, die aus Ofloxacin, Benzophenon-3, Coffein, Carbamazepin, Diclofenac, Bisphenol A, Benzophenon-4, Rhodamin und Triton X-100 sowie Gemischen davon besteht.

7. Verfahren gemäß Anspruch 3, **dadurch gekennzeichnet, dass** das Fluid aus der Gruppe ausgewählt ist, die aus Abwasser, Trinkwasser, Luftströmen und biologischen Fluiden besteht.

8. Verfahren gemäß Anspruch 3, **dadurch gekennzeichnet, dass** der Schritt a) durch Dispersion des porösen Granulats in dem Fluid durchgeführt wird.

9. Verfahren gemäß Anspruch 3, **dadurch gekennzeichnet, dass** der Schritt a) durch Eintauchen eines Behälters, der aus einem für das Fluid durchlässigen Material besteht und das poröse Granulat enthält, in das Fluid durchgeführt wird.

10. Verfahren gemäß Anspruch 9, **dadurch gekennzeichnet, dass** das durchlässige Material aus der Gruppe ausgewählt ist, die aus Cellulose und ihren Derivaten, Nylon, Teflon, Polyethersulfonen, Polyvinylidenfluoriden, Polypropylenen, Polyacrylnitril und Polyamiden besteht.

11. Verfahren gemäß Anspruch 3, **dadurch gekennzeichnet, dass** der Schritt a) mittels einer Vorrichtung (1) durchgeführt wird, die eine stützende Struktur (2) umfasst, in der sich eine Adsorptionskammer (4) und wenigstens ein Paar Öffnungen (6) für den Einlass bzw. den Auslass des Fluids in die/aus der Adsorptionskammer (4) befinden, wobei sich die Adsorptionskammer (4) und das Paar Öffnungen (6) in Fluidverbindung miteinander befinden und wobei das poröse Granulat (7) in der Adsorptionskammer (4) angeordnet ist.

12. Verfahren zur Herstellung eines porösen Granulats aus hohlen Polysulfonfasern gemäß Anspruch 1, umfassend die Schritte des Härtens der hohlen Polysulfonfasern durch Senkung der Temperatur und anschließendes mechanisches Mahlen derselben.

13. Verfahren gemäß Anspruch 12, **dadurch gekennzeichnet, dass** die hohlen Polysulfonfasern aus Abfall aus der Verarbeitung von hohlen Polysulfonfasern stammen.

## Revendications

1. Granules poreux de fibres de polysulfone creuses ou leurs dérivés ayant une longueur moyenne se situant dans la plage allant de 0,1 à 5 mm dans lesquels lesdits granules sont fournis avec une surface externe munie de pores ayant un diamètre moyen se situant dans la plage allant de 5 µm à 15 µm et une surface interne munie de pores ayant un diamètre moyen se situant dans la plage allant de 5 nm à 80 nm.

2. Granules poreux de fibres creuses selon la revendication 1, **caractérisés en ce qu'**ils ont un diamètre interne moyen se situant dans la plage allant de 50 µm à 250 µm.

3. Procédé d'enlèvement d'au moins une molécule organique à partir d'un fluide comprenant l'étape de a) mise en contact des granules poreux de fibres creuses selon la revendication 1 avec ledit fluide.

4. Procédé selon la revendication 3, **caractérisé en ce que** ladite molécule organique est choisie dans le groupe constitué par des composés organiques volatils (COV), des hydrocarbures aromatiques polycycliques (PAH), des filtres contre les UV, des antibiotiques, des composés anti-inflammatoires, des composés anticonvulsivants, des alcaloïdes, des colorants, des tensioactifs non ioniques, des monomères de matériaux plastique ou leurs mélanges.

5. Procédé selon la revendication 4, **caractérisé en ce que** ladite molécule organique est choisie dans le groupe constitué par les benzophénones, les antibiotiques fluoroquinolone, les dibenzazépines, les alcaloïdes à coeur de purine, les anti-inflammatoires non stéroïdiens aryl-acétiques, les colorants de xanthène, les alkylphénol-éthoxylates, les bisphénols et leurs mélanges.

6. Procédé selon la revendication 4 ou 5, **caractérisé en ce que** la molécule organique est choisie dans le groupe constitué par l'ofloxacine, la benzophénone-3, la caféine, la carbamazépine, le diclofénac, le bisphénol A, la benzophénone-4, la rhodamine et le Triton X-100 et leurs mélanges.

7. Procédé selon la revendication 3, **caractérisé en ce que** ledit fluide est choisi dans le groupe constitué par les eaux usées, l'eau de boisson, l'écoulement d'air et les fluides biologiques.

8. Procédé selon la revendication 3, **caractérisé en ce que** ladite étape a) est réalisée par dispersion desdits granules poreux dans ledit fluide.

9. Procédé selon la revendication 3, **caractérisé en ce que** ladite étape a) est réalisée par immersion dans ledit fluide d'un récipient constitué d'un matériau perméable audit fluide contenant lesdits granules poreux.

10. Procédé selon la revendication 9, **caractérisé en ce que** ledit matériau perméable est choisi dans le groupe constitué par la cellulose et ses dérivés, le Nylon, le Teflon, des polyéthersulfones, des fluorures de polyvinylidène, des polypropylènes, le polyacrylonitrile et des polyamides.

11. Procédé selon la revendication 3, **caractérisé en ce que** ladite étape a) est réalisée au moyen d'un dispositif (1) comprenant une structure de support (2) où sont obtenues une chambre d'adsorption (4) et au moins une paire d'ouvertures (6) pour l'entrée et la sortie respectivement dudit fluide dans/hors de ladite chambre d'adsorption (4), où ladite chambre d'adsorption (4) et ladite paire d'ouvertures (6) sont en connexion fluidique l'une avec l'autre et où lesdits granules poreux (7) sont disposés dans ladite chambre d'adsorption (4).

12. Procédé de préparation de granules poreux de fibres de polysulfone creuses selon la revendication 1 comprenant les phases de durcissement par abaissement de la température des fibres de polysulfone creuses et du broyage mécanique subséquent.

13. Procédé selon la revendication 12, **caractérisé en ce que** lesdites fibres de polysulfone creuses dérivent du traitement des déchets de fibre de polysulfone creuse.
